# EUROPÄISCHE PATENTSCHRIFT

(11) **EP 3 521 673 B1**
(45) Veröffentlichungstag und Bekanntmachung des Hinweises auf die Patenterteilung: **24.05.2023**
(21) Anmeldenummer: 19155413.8
(22) Anmeldetag: 05.02.2019
(51) Int. Cl.: F16K 31/52, F16K 1/24

(54) **VENTILEINRICHTUNG**
VALVE DEVICE
DISPOSITIF DE SOUPAPE

(30) Priorität: 06.02.2018 DE 102018000929
(43) Veröffentlichungstag der Anmeldung: 07.08.2019
(73) Patentinhaber: Joma-Polytec GmbH, 72411 Bodelshausen (DE)
(72) Erfinder: Weiß, Rainer, 72351 Geislingen (DE); Bulach, Sven, 72379 Hechingen (DE); Knöll, Matthias, 72116 Mössingen (DE); Vollmer, Gerold, 73105 Dürnau (DE)
(74) Vertreter: Patentanwälte Magenbauer & Kollegen Partnerschaft mbB

(56) Entgegenhaltungen:
- DE-A1- 3 206 479
- DE-A1- 3 806 325
- DE-C1- 10 131 795
- FR-A1- 2 625 543
- US-A- 3 669 405
- US-A- 3 847 373
- US-A- 4 634 094

## Beschreibung

Die Erfindung betrifft eine Ventileinrichtung mit einem Ventilgehäuse, das von einem Fluidkanal durchsetzt ist, der sich von einem Eingangsanschluss zu einem Ausgangsanschluss erstreckt, wobei im Fluidkanal ein Ventilglied beweglich zwischen einer Schließstellung zur Blockierung des Fluidkanals und einer Öffnungsstellung zur Freigabe des Fluidkanals aufgenommen ist und wobei im Fluidkanal ein Ventilsitz ausgebildet ist, der für eine abdichtende Anlage eines Dichtabschnitts des Ventilglieds in der Schließstellung ausgebildet ist, sowie mit einer Führungseinrichtung, die für eine Führung des Dichtabschnitts entlang einer zwischen der Schließstellung und der Öffnungsstellung erstreckten Führungsbahn ausgebildet ist, wobei die Führungsbahn wenigstens zwei Führungsbahnabschnitte mit unterschiedlicher Krümmung aufweist.

Ventileinrichtungen sind in unterschiedlichsten Ausführungsformen bekannt und werden beispielsweise zur Beeinflussung eines Fluidstroms in einem Kühlungssystem eines Verbrennungsmotors eingesetzt. Hierbei ist vorgesehen, dass beispielsweise als Fluid dienendes Kühlwasser von einer Wasserpumpe in Kühlkanäle eines Motorblocks eines Verbrennungsmotors oder in einen Kühler gefördert werden soll, wobei ein Volumenstrom des Fluids beispielsweise in Abhängigkeit von einer Temperatur des Fluids mit Hilfe einer Ventileinrichtung beeinflusst werden soll. Hierbei umfasst die Ventileinrichtung ein Ventilgehäuse, an dem ein beispielhaft von der Wasserpumpe ausgehender Kühlwasserschlauch an einem geeigneten Anschlussstutzen festgelegt ist, der als Eingangsanschluss der Ventileinrichtung dient. Ausgehend vom Eingangsanschluss erstreckt sich ein Fluidkanal durch das Ventilgehäuse hindurch bis zu einem Ausgangsanschluss, der beispielsweise von einem Ausgangsstutzen gebildet wird. An diesem kann ein weiterer Kühlwasserschlauch angeschlossen werden, der mit den Fluidkanälen in Motorblock oder mit einem Kühler verbunden werden kann. Im Fluidkanal ist ein Ventilglied aufgenommen, das in einer Schließstellung einen Fluidstrom durch den Fluidkanal vollständig unterbinden kann und in einer Freigabestellung einen möglichst geringen Strömungswiderstand für das Fluid aufweisen soll. Das Ventilglied umfasst einen Dichtabschnitt, der für eine abdichtende Anlage an einem im Fluidkanal ausgebildeten Ventilsitz vorgesehen ist. Ferner ist eine Führungseinrichtung vorgesehen, die eine Relativbeweglichkeit des Ventilglieds gegenüber dem Ventilgehäuse gewährleistet und Freiheitsgrade der Bewegung für das Ventilglied begrenzt, um unkontrollierte Bewegungen des Ventilglieds zu verhindern. Eine derartige Führungseinrichtung kann beispielsweise von einer in den Fluidkanal ausmündenden Führungsbohrung gebildet werden, in der das bereichsweise zylindrisch ausgebildete Ventilglied zumindest abschnittsweise aufgenommen ist, so dass Freiheitsgrade der Bewegung für das Ventilglied auf eine lineare Bewegung längs einer Symmetrieachse der Führungsbohrung beschränkt werden. In diesem Fall ist eine Führungsbahn, entlang derer der Dichtabschnitt zwischen der Schließstellung und der Öffnungsstellung bewegt wird, als Gerade ausgebildet. Bei einer alternativen Ausführungsform einer bekannten Ventileinrichtung ist eine schwenkbewegliche Lagerung des Dichtabschnitts durch die Führungseinrichtung relativ zum Ventilgehäuse vorgesehen, so dass die Führungsbahn einem Kreisabschnitt entspricht.

Die US 3 669 405 A offenbart ein Klappenventil mit einer beim Öffnen erst axial verschobenen und dann verdrehten Klappe, die durch eine im Wesentlichen außerhalb des Durchflussquerschnitts des Gehäuses gelagerte Welle, welche mit der Klappe durch einen zentral auf der Klappe auf einem parallel zur Welle verlaufenden Zapfen drehbar gelagerten Hebel verbunden ist, gesteuert und in ihrem Bewegungsablauf durch beiderseits des Hebels sitzende, an einem Ende gelenkig am Gehäuse und am anderen Ende gelenkig an der Klappe gelagerte Lenker geführt ist.

Die DE 101 31 795 C1 offenbart ein Absperrorgan mit einem in eine Rohrleitung einsetzbaren Gehäuse und einem aus einer Führungsklappe sowie einer darauf translatorisch verschieblichen Dichtklappe bestehenden Drehklappenpaar, welches von einem Zahnradgetriebe in eine Öffnungsstellung und gegen einen Anschlag im Gehäuse in eine Dichtstellung verschwenkbar ist, wobei das Zahnradgetriebe von einem auf einer das Gehäuse quer durchsetzenden Antriebswelle drehfest angeordneten Ritzel und einer auf einem Fortsatz der Dichtklappe angeordneten Zahnstange gebildet ist.

Die US 4 634 094 A offenbart ein Absperrventil mit einem klappenförmigen Absperrteil, das in einem Strömungsdurchgang durch ein Gehäuse montiert ist und das relativ dünn ist, so dass es in der vollständig geöffneten Stellung den Durchflussquerschnitt nicht nennenswert verringert. Das Absperrteil ist an einem Punkt in der Gehäusewand schwenkbar gelagert und wird an einem diagonal gegenüberliegenden Punkt durch eine Kombination aus einem Führungsstift und einer Gleitführung gehalten. Ein außerhalb des Strömungskanals befindliches Stellglied ist mit dem Absperrteil verbunden, um es zwischen der geschlossenen und der geöffneten Stellung zu verschieben. Ein Aktuator und eine damit gekoppelte Schaltstange bewirken die Bewegung des Führungsbolzens in der Gleitführung, so dass das Absperrteil um eine quer zur Achse des Durchflusskanals verlaufende Achse zwischen der geschlossenen und der geöffneten Stellung geschwenkt wird. Durch die geradlinige Axialbewegung der Schiebestange erfolgt die Schwenkbewegung des Absperrteils und das Absperrteil wird in die geschlossene Stellung in dichtenden Eingriff mit einem Ventilsitz im Gehäuse gedrückt.Die Aufgabe der Erfindung besteht darin, eine Ventileinrichtung bereitzustellen, die in der Schließstellung eine zuverlässige Abdichtung und in der Öffnungsstellung einen möglichst geringen Strömungswiderstand für das Fluid gewährleistet.

Diese Aufgabe wird für eine Ventileinrichtung der eingangs genannten Art mit den Merkmalen des Anspruchs 1 gelöst.

Dabei ist vorgesehen, dass der Dichtabschnitt bei einer Annäherung an den Ventilsitz eine vorteilhafte Relativbewegung gegenüber dem Ventilgehäuse und den darin ausgebildeten Ventilsitz durchführt. Als vorteilhaft ist anzusehen, dass ein möglichst geringer Verschleiß für den Ventilsitz und den Dichtabschnitt sowie eine zuverlässige Abdichtwirkung zwischen dem Ventilsitz und dem Dichtabschnitts gewährleistet wird. Hingegen kann bei einer Annäherung des Dichtabschnitts an die Öffnungsstellung, die längs eines zweiten Führungsbahnabschnitts erfolgt, beispielsweise erreicht werden, dass der Dichtabschnitt oder das mit dem Dichtabschnitt versehene Ventilglied in strömungsgünstiger Weise zwischen dem Eingangsanschluss und dem Ausgangsanschluss im Fluidkanal angeordnet ist, um eine möglichst ungehinderte Fluidströmung zwischen dem Eingangsanschluss und dem Ausgangsanschluss zu ermöglichen.

Erfindungsgemäß ist vorgesehen, dass der Ventilsitz eine umlaufende, radial nach innen ausgerichtete, vorzugsweise zylindrische, insbesondere kreiszylindrische, Dichtfläche umfasst und dass der Dichtabschnitt eine umlaufende, radial nach außen ausgerichtete, vorzugsweise zylindrische, insbesondere kreiszylindrische, Außenumfangsfläche umfasst. Bei einer derartigen Ausgestaltung des Ventilsitzes sowie des Dichtabschnitts ist davon auszugehen, dass der Dichtabschnitt in der Schließstellung einem vom Ventilsitz begrenzten Querschnitt des Fluidkanals vollständig ausfüllt und Dichtkräfte zwischen dem Ventilsitz und dem Dichtabschnitts in radialer Richtung ausgerichtet sind. Hierdurch kann eine vorteilhafte Abdichtwirkung zwischen dem Ventilsitz und dem Dichtabschnitt gewährleistet werden, wobei vorzugsweise vorgesehen ist, dass der Dichtabschnitt bei der Annäherungsbewegung längs des ersten Führungsbahnabschnitts zum Erreichen der Schließstellung eine, zumindest nahezu ausschließlich, lineare Bewegung relativ zum Ventilsitz ausführt. Beispielhaft ist vorgesehen, dass der Ventilsitz als zylindrische, insbesondere kreiszylindrische Ausnehmung ausgebildet ist und dass die Dichtfläche eine zylindrische, insbesondere kreiszylindrische, Geometrie aufweist. Ferner ist vorgesehen, dass zum Erreichen der Schließstellung ein Eintauchen des Dichtabschnitts in den Ventilsitz längs der parallel zueinander ausgerichteten Symmetrieachsen, insbesondere Kreissymmetrieachsen, der zylindrischen Geometrien von Ventilsitz und Dichtabschnitt vorgesehen ist. Bei einer derartigen Ausgestaltung von Ventilsitz und Dichtabschnitts können Maßtoleranzen für das Ventilgehäuse und das Ventilglied auch im Bereich des Ventilsitzes und des Dichtabschnitts in einer Weise gewählt werden, die eine kostengünstige Herstellung dieser Komponenten erlaubt, da keine hohe Präzision für diese Komponenten erforderlich ist.

Bevorzugt ist vorgesehen, dass ein von der Schließstellung ausgehender erster Führungsbahnabschnitt einen größeren Krümmungsradius als ein daran anschließender, bis zur Öffnungsstellung erstreckter zweiter Führungsbahnabschnitt aufweist. Vorzugsweise ist vorgesehen, dass der erste Führungsbahnabschnitt mit einem sehr großen Krümmungsradius oder geradlinig ausgebildet ist, um ein für die Abdichtwirkung vorteilhaftes lineares Eintauchen des Dichtabschnitts in den Ventilsitz zu ermöglichen. Bevorzugt ist vorgesehen, dass der erste Führungsbahnabschnitt stetig in den zweiten Führungsbahnabschnitt übergeht. Gegebenenfalls umfasst die Führungsbahn mehr als zwei Führungsbahnabschnitte, die insbesondere zwischen dem ersten Führungsbahnabschnitt und dem zweiten Führungsbahnabschnitt angeordnet sein können.

Bei einer vorteilhaften Weiterbildung der Erfindung ist vorgesehen, dass der Dichtabschnitt ein umlaufendes, ringförmig, vorzugsweise kreisringförmig, insbesondere als Rundschnurdichtung, ausgebildetes Dichtmittel umfasst, das radial nach außen von der Außenumfangsfläche des Ventilglieds abragt und das eine Dichtebene bestimmt, wobei die Führungseinrichtung einen Schwenkhebel umfasst, der schwenkbeweglich um eine erste Schwenkachse am Ventilglied und schwenkbeweglich um eine zweite Schwenkachse am Ventilgehäuse gelagert ist, wobei die erste Schwenkachse und die zweite Schwenkachse jeweils parallel zu Dichtebene und/oder parallel zueinander ausgerichtet sind. Die Aufgabe des Dichtmittels besteht darin, einen Spalt abzudichten, der zwischen dem typischerweise aus einem formstabilen Material, insbesondere Kunststoff, hergestellten Ventilsitz und dem typischerweise aus formstabilem Material, insbesondere Kunststoff, hergestellten Dichtabschnitt, ausgebildet ist. Bei dem Spalt handelt es sich insbesondere um einen Ringspalt mit kreisförmiger Geometrie. Hierzu ist das Dichtmittel vorzugsweise aus einem gummielastischen Material, insbesondere NBR (Nitrile Butadiene Rubber) oder EPDM (Ethylen-Propylen-Dien-Kautschuk, M-Gruppe) hergestellt und weist bei einer Anbringung am Ventilglied in radialer Richtung ein Übermaß gegenüber dem Ventilsitz auf. Hierdurch tritt bei der, vorzugsweise linearen, Eintauchbewegung des Dichtabschnitts in den Ventilsitz eine radiale elastische Deformation des Dichtmittels auf, durch die eine zuverlässige Abdichtung des Spalts zwischen dem Dichtabschnitt und dem Ventilsitz gewährleistet ist. Eine umlaufende Kontaktzone zwischen dem Dichtmittel und dem Ventilsitz bestimmt eine ringförmig ausgebildete Dichtlinie, die vorzugsweise in einer als Dichtebene bezeichneten Ebene enthalten ist.

Die Aufgabe des Schwenkhebels besteht darin, das Ventilglied entlang der Führungsbahn zuführen, wobei die schwenkbewegliche Lagerung des Ventilglieds am Schwenkhebel zumindest einen Freiheitsgrad der Bewegung, nämlich einen rotatorischen Freiheitsgrad der Bewegung, für das Ventilglied offenlässt. Dieser Freiheitsgrad der Bewegung ermöglicht eine zumindest abschnittsweise Variationen der Krümmung der Führungsbahn für den Dichtabschnitt zwischen der Schließstellung und der Öffnungsstellung. Um eine eindeutige Führung, insbesondere eine Zwangsführung für das Ventilglied zu verwirklichen kann beispielhaft zusätzlich zum Schwenkhebel eine Kulissenführung für das Ventilglied vorgesehen sein. Hierbei greift beispielsweise ein am Ventilglied ausgebildeter Führungszapfen in eine Führungsnut ein, die an einer Innenoberfläche des Ventilgehäuses ausgebildet ist.

Alternativ kann vorgesehen sein, dass die Führungseinrichtung einen zweiten Schwenkhebel umfasst, der schwenkbeweglich um eine dritte Schwenkachse am Ventilglied und schwenkbeweglich um eine vierte Schwenkachse am Ventilgehäuse gelagert ist, wobei die dritte Schwenkachse und die vierte Schwenkachse jeweils parallel zu Dichtebene und/oder parallel zueinander ausgerichtet sind. Durch den zweiten, schwenkbeweglich am Ventilglied und am Ventilgehäuse gelagerten Schwenkhebel wird ebenfalls eine Zwangsführung für das Ventilglied entlang der Führungsbahn ermöglicht. Dies bedeutet, dass zu jeder Schwenkstellung des ersten Schwenkhebels eine eindeutige Schwenkstellung des zweiten Schwenkhebels sowie eine eindeutige räumliche Lage des Ventilglieds vorgegeben sind. Damit können in Abhängigkeit von der Anordnung und geometrischen Gestaltung der Schwenkhebel sowie in Abhängigkeit von der Ausrichtung der Schwenkachsen die gewünschten, abschnittsweise unterschiedlichen Krümmungen für die Führungsbahn verwirklicht werden. Exemplarisch ist vorgesehen, dass Schwenkachsen parallel zueinander und parallel zu Dichtebene ausgerichtet sind, wodurch gewährleistet werden kann, dass die Führungsbahn in genau einer Führungsebene, die normal zu den Schwenkachsen ausgerichtet ist, verläuft.

In weiterer Ausgestaltung der Erfindung ist vorgesehen, dass die erste Schwenkachse und die zweite Schwenkachse in einer erste Achsebene angeordnet sind, die in der Schließstellung zumindest nahezu parallel zur Dichtebene angeordnet ist und/oder dass die dritte Schwenkachse und die vierte Schwenkachse in einer zweite Achsebene angeordnet sind, die in der Schließstellung zumindest nahezu parallel zu Dichtebene angeordnet ist. Bevorzugt ist vorgesehen, dass die erste Achsebene und die zweite Achsebene in der Schließstellung einen Winkel von maximal 5 Grad, bevorzugt maximal 4 Grad, insbesondere maximal 3 Grad, mit der Dichtebene einnehmen. Besonders vorteilhaft ist es, wenn die beiden Achsebenen in der Schließstellung zumindest nahezu parallel zueinander ausgerichtet sind, insbesondere einen Winkel von weniger als 2 Grad, insbesondere weniger als einem Grad, zueinander einnehmen. Hierdurch wird für den Dichtabschnitt ausgehend von der Schließstellung zunächst eine zumindest nahezu vollständig lineare Bewegung entlang des ersten, zumindest nahezu geraden Führungsbahnabschnitts ermöglicht, wodurch ein Einschieben des Dichtabschnitts in den Ventilsitz zum Einnehmen der Schließstellung bzw. einen Ausschieben des Dichtabschnitts aus dem Ventilsitz zum Verlassen der Schließstellung und damit eine, insbesondere für das Dichtmittel, schonende Relativbewegung des am Dichtabschnitt aufgenommenen Dichtmittels gegenüber dem Ventilsitz ermöglicht wird.

In weiterer Ausgestaltung der Erfindung ist vorgesehen, dass ein Abstand der ersten Schwenkachse zur Dichtebene kleiner als ein Abstand der dritten Schwenkachse zu Dichtebene ist und/oder dass ein Abstand der ersten Schwenkachse zu einer Mittelachse des Dichtabschnitts kleiner als ein Abstand der dritten Schwenkachse zur Mittelachse des Dichtabschnitts ausgebildet ist. Vorzugsweise sind die Schwenkachsen der Schwenkhebel derart zueinander ausgerichtet und angeordnet, dass das vom Ventilglied und den Schwenkhebeln gebildete Hebelgetriebe zumindest in der Schließstellung eine parallelogrammartige Führung bildet, um einen zumindest nahezu geraden ersten Führungsbahnabschnitt zu gewährleisten.

Bei einer vorteilhaften Weiterbildung der Erfindung ist eine Antriebseinrichtung vorgesehen, die mit dem ersten Schwenkhebel oder mit dem zweiten Schwenkhebel, insbesondere über eine Kniehebelanordnung, gekoppelt ist, um eine Übertragung einer Stellbewegung von der Antriebseinrichtung auf den ersten Schwenkhebel oder den zweiten Schwenkhebel zu ermöglichen. Die Antriebseinrichtung kann wahlweise innerhalb des Ventilgehäuses oder außerhalb des Ventilgehäuses angeordnet sein und zur Bereitstellung einer Linearbewegung oder einer Schwenkbewegung oder einer Überlagerung zwischen einer Linearbewegung und einer Schwenkbewegung ausgebildet sein. Beispielhaft ist vorgesehen, dass die Antriebseinrichtung einen Elektromotor und ein Schneckengetriebe umfasst, wobei ein Abtrieb eines Schneckenrads des Schneckengetriebes mit einem beispielhaft im Ventilgehäuse drehbeweglich gelagerten Schwenkzapfen verbunden ist, der seinerseits über einen radial abragenden Hebel und eine Koppelstange mit dem ersten Schwenkhebel oder dem zweiten Schwenkhebel verbunden ist. Vorzugsweise ist die Koppelstange derart zwischen der Antriebseinrichtung und dem ersten Schwenkhebel oder dem zweiten Schwenkhebel angeordnet, dass eine Kniehebelanordnung ausgebildet wird. Hierdurch wirkt in der Schließstellung lediglich eine Stützkraft, jedoch kein Drehmoment von jeweiligen Schwenkhebel über die Koppelstange auf den Schwenkzapfen ein, so dass in der Schließstellung eine Kraftrückwirkung vom Ventilglied auf die Antriebseinrichtung verhindert wird. Alternativ kann vorgesehen sein, dass die Antriebseinrichtung unmittelbar mit einem der Schwenkhebel gekoppelt ist, um eine Einleitung eines Drehmoments auf eine mit dem Schwenkhebel verbundene, insbesondere parallel zur zweiten oder vierten Schwenkachse angeordnete, Antriebswelle zu ermöglichen.

Zweckmäßig ist es, wenn das Ventilglied einen Grundkörper umfasst, wobei der Dichtabschnitt an einer Vorderwand des Grundkörpers ausgebildet ist, wobei die erste und die dritte Schwenkachse parallel und entgegengesetzt zueinander ausgerichtete, jeweils an die Vorderwand angrenzende Seitenwände des Grundkörpers durchsetzen und wobei ein Bodenbereich des Grundkörpers angrenzend an die Vorderwand und an die Seitenwände des Grundkörpers ausgebildet ist. Beispielhaft bilden die Vorderwand und die Seitenwände ein U-förmiges Profil, das einseitig durch den Bodenbereich zumindest teilweise verschlossen ist. Dabei dient die Vorderwand als Abstützung für den Dichtungsabschnitt, während die Seitenwände beispielsweise mit zapfenförmig ausgebildeten, jeweils in entgegengesetzter Richtung abragenden Vorsprüngen versehen sein können, die als Achsen für die schwenkbewegliche Kopplung mit den jeweils zugeordneten Schwenkhebeln dienen können. Der Bodenbereich des Grundkörpers hat eine Stabilisierungsfunktion, da er einen Abstand der Seitenwände zueinander bestimmt. Ergänzend kann der Bodenbereich des Grundkörpers in der Öffnungsstellung bei einer geeigneten räumlichen Anordnung des Ventilglieds bezüglich des Fluidkanals zur strömungsgünstigen Umlenkung des Fluidstroms, der den Fluidkanal zwischen dem Eingangsanschluss und dem Ausgangsanschluss durchströmt, genutzt werden.

Besonders bevorzugt ist vorgesehen, dass ein freier Querschnitt des Ventilsitzes eine Projektionsfläche bestimmt und dass eine Projektion des Bodenbereich des Grundkörpers in der Öffnungsstellung auf die Projektionsfläche zumindest nahezu dem freien Querschnitt entspricht.

Erfindungsgemäß ist vorgesehen, dass eine Hüllgeometrie für den Fluidkanal zwischen dem Eingangsanschluss und dem Ausgangsanschluss als gekrümmter, insbesondere als 90-Grad, Rohrbogen ausgebildet ist und dass der Bodenbereich des Grundkörpers in der Öffnungsstellung die Hüllgeometrie abschnittsweise begrenzt. Exemplarisch ist vorgesehen, dass der freie Querschnitt des Ventilsitzes in der Schließstellung vollständig durch das dem Dichtabschnitt zugehörige Dichtmittel verschlossen ist und somit eine Projektion des Dichtabschnitts auf die vom freien Querschnitt des Ventilsitzes gebildete Projektionsfläche identisch mit der Projektionsfläche ist. Durch die Ausgestaltung der Führungseinrichtung und die daraus resultierende Führungsbahn mit wenigstens zwei unterschiedlich gekrümmten Führungsbahnabschnitten kann vorgesehen sein, dass sich der Dichtabschnitt ausgehend von der Schließstellung derart in die Öffnungsstellung bewegt, dass in der Öffnungsstellung keine Überschneidung einer Projektion des Dichtabschnitts auf die vom Ventilsitz bestimmte Projektionsfläche vorliegt. Vielmehr ist vorzugsweise vorgesehen, dass eine Projektion des Dichtabschnitts auf eine die Projektionsfläche enthaltende Projektionsebene abseits der Projektionsfläche des Ventilsitzes liegt. Ferner kann vorgesehen sein, dass eine Projektion des Bodenbereichs des Grundkörpers auf die Projektionsebene eine Überdeckung mit der Projektionsfläche des freien Querschnitts des Ventilsitzes aufweist oder zumindest im Wesentlichen der Projektionsfläche entspricht. Hierdurch kann erreicht werden, dass der Bodenbereich des Grundkörpers das durch den Ventilsitz strömende Fluid in Richtung des Ausgangsanschlusses umlenkt, was zumindest dann von Vorteil ist, wenn der Eingangsanschluss und der Ausgangsanschluss eine unterschiedliche räumliche Ausrichtung aufweisen, beispielsweise Mittelachsen des Eingangsanschlusses und des Ausgangsanschlusses einen Winkel von 90 Grad zueinander einnehmen. Somit erfüllt das Ventilglied in einer Doppelfunktion sowohl die Aufgabe eines zeitweiligen Verschließens des Ventilsitzes als auch die für einen geringen Strömungswiderstand der Ventileinrichtung wichtige Funktion der Fluidumlenkung.

Unter der exemplarischen Annahme, dass der Eingangsanschluss und der Ausgangsanschluss an Wandabschnitten des Ventilgehäuses ausgebildet sind, die zumindest nahezu einen Winkel von 90 Grad einschließen und jeweils kreiszylindrisch ausgebildet sind, kann eine Hüllgeometrie für den Fluidkanal, der sich zwischen dem Eingangsanschluss und dem Ausgangsanschluss erstreckt, als um 90 Grad gekrümmter Rohrbogen mit kreiszylindrischem Querschnitt angesehen werden. In der Praxis ist die rohrförmige Hüllgeometrie für den Fluidkanal zumindest nicht vollständig durch Wandabschnitte des Ventilgehäuses begrenzt, da das Ventilglied zwischen der Schließstellung und der Öffnungsstellung bewegt werden muss und hierfür Bewegungsraum benötigt wird. Für einen möglichst geringen Strömungswiderstand in der Ventileinrichtung ist es jedoch vorteilhaft, wenn der Bodenbereich des Grundkörpers für eine Ablenkung des Fluids im Fluidkanal eingesetzt werden kann und hierbei zumindest abschnittsweise die Hüllgeometrie für den Fluidkanal bestimmt. Bevorzugt ist vorgesehen, dass an einer dem Fluidkanal zugewandten Unterseite des Bodenbereichs des Grundkörpers eine muldenartige Vertiefung ausgebildet ist, deren Geometrie als Ausschnitt einer Mantelfläche eines, insbesondere kreiszylindrischen, Rohrbogens verwirklicht ist.

Eine vorteilhafte Ausführungsform der Erfindung ist in der Zeichnung dargestellt. Hierbei zeigt:
- Figur 1: eine geschnittene, perspektivische Darstellung einer Ventileinrichtung in einer Öffnungsstellung,
- Figur 2: eine Draufsicht auf die Ventileinrichtung gemäß der Figur 1 in einer Schließstellung,
- Figur 3: eine Schnittdarstellung der Ventileinrichtung gemäß einem in der Figur 2 eingetragenen Schnittverlauf,
- Figur 4: eine Vorderansicht der Ventileinrichtung gemäß der Figur 2 in der Schließstellung,
- Figur 5: eine Draufsicht auf die Ventileinrichtung gemäß der Figur 1 in einer Öffnungsstellung,
- Figur 6: eine Schnittdarstellung der Ventileinrichtung gemäß der Figur 5, und
- Figur 7: eine Vorderansicht der Ventileinrichtung gemäß der Figur 5.

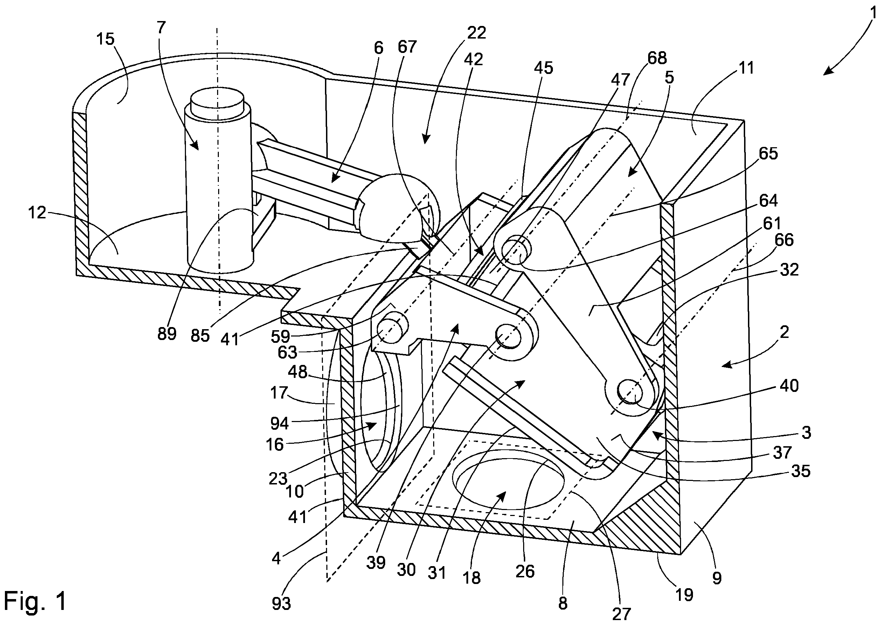

Eine exemplarisch in den Figuren 1 bis 7 in unterschiedlichen Ansichten und zwei unterschiedlichen Funktionsstellungen dargestellte Ventileinrichtung 1 ist zur Beeinflussung eines Fluidstroms, insbesondere eines Flüssigkeitsstroms, ausgebildet und kann beispielhaft in einem nicht näher dargestellten Kühlkreislauf eines ebenfalls nicht näher dargestellten Verbrennungsmotors zum Einsatz kommen.

Die Ventileinrichtung 1 umfasst gemäß den schematischen Darstellungen der Figuren 1 bis 7 ein rein exemplarisch im Kunststoffspritzgussverfahren hergestelltes Ventilgehäuse 2, in dem ein Ventilglied 3, ein erster Schwenkhebel 4, ein zweiter Schwenkhebel 5, eine Koppelstange 6 sowie ein Steuerzapfen 7 angeordnet sind. Das Ventilgehäuse 2 umfasst beispielhaft eine Bodenplatte 8, eine rechte Seitenwand 9, eine linke Seitenwand 10, eine Rückwand 11 sowie eine rein exemplarisch parallel zur Bodenplatte 8 ausgerichtete und an die linke Seitenwand 10 angrenzende Stützplatte 12. Ferner umfasst das Ventilgehäuse 2 eine an die Rückwand 11 anschließende und mit der Stützplatte 12 verbundene Abschlusswand 15, die beispielhaft kreismantelabschnittsförmig und koaxial zum Steuerzapfen 7 ausgebildet ist.

In den Darstellungen der Figuren 1 bis 7 fehlen aus Gründen der Übersichtlichkeit eine parallel und gegenüberliegend zur Rückwand 11 anzuordnende vordere Wand sowie eine von oben auf das Ventilgehäuse 2 aufzusetzende Deckplatte, mit denen das Ventilgehäuse 2 fluiddicht abgeschlossen werden kann. Exemplarisch ist vorgesehen, dass an der linken Seitenwand 10 ein Eingangsanschluss 16 ausgebildet ist, dem beispielhaft ein von der linken Seitenwand 10 abragender, nur schematisch dargestellten Rohrstutzen 17 zugeordnet ist, der beispielsweise zum Anschluss eines nicht näher dargestellten Kühlwasserschlauchs genutzt werden kann. Ferner ist in der Bodenplatte 8 ein Ausgangsanschluss 18 ausgebildet, dem beispielhaft ein an der Unterseite 19 der Bodenplatte 8 angeordneter, in den Darstellungen der Figuren 1 bis 7 nicht sichtbarer Rohrstutzen zugeordnet ist, der beispielsweise zum Anschluss eines nicht näher dargestellten Kühlwasserschlauchs genutzt werden kann.

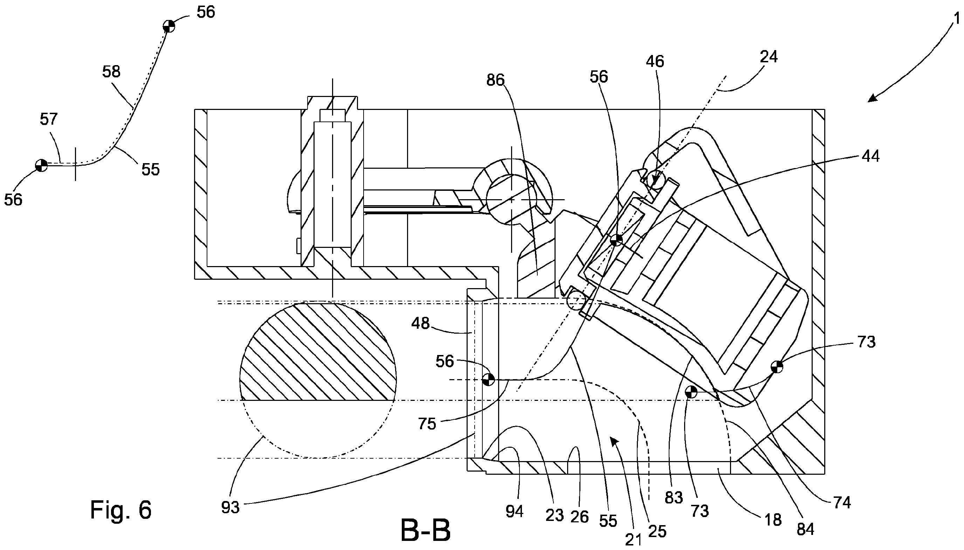

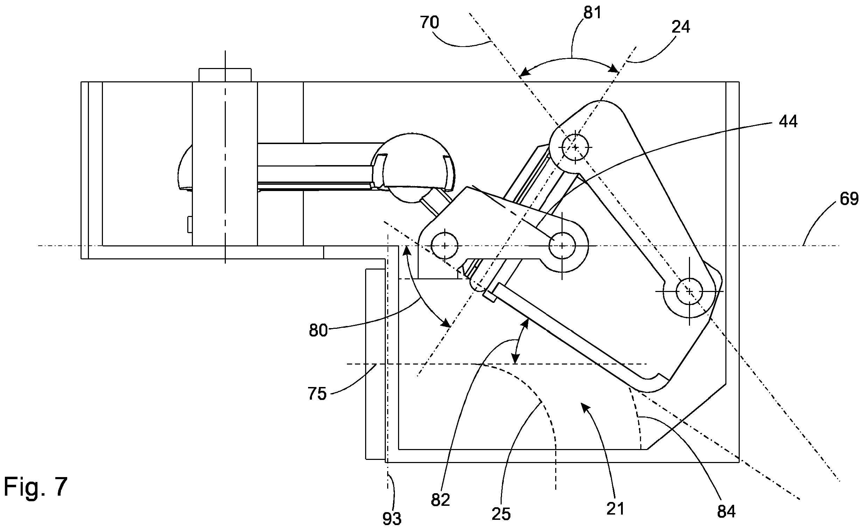

Wie aus den Figuren 1 bis 7 entnommen werden kann, sind der Eingangsanschluss 16 und der Ausgangsanschluss 18 mit Hilfe des Ventilgehäuses 2 fluidisch kommunizierend miteinander verbunden, wobei ein am Eingangsanschluss 16 in das Ventilgehäuse 2 einströmendes Fluid und durch den Ausgangsanschluss 18 abströmendes Fluid einen vom Ventilgehäuse 2 begrenzten Innenraum 22 vollständig ausfüllen kann. Der nachstehend näher beschriebene, in den Figuren 6 und 7 dargestellte Fluidkanal 21 repräsentiert einen Raumabschnitt, der vom Fluid zwischen dem Eingangsanschluss 16 und dem Ausgangsanschluss 18 bevorzugt durchströmt wird, was jedoch nicht ausschließt, dass ein kleiner Teil des Fluids in andere Raumabschnitte des Innenraums 22 strömt.

Bei einer Bereitstellung von Fluid, beispielsweise Kühlwasser, am Eingangsanschluss 16 kann das Fluid in der Stellung des Ventilglieds 3, die in der Figur 1 gezeigt ist und die einer Öffnungsstellung entspricht, auf kurzem Weg zum Ausgangsanschluss 18 strömen. Das Ventilglied 3 dient hierbei dazu, den Fluidstrom, der im Wesentlichen senkrecht zu einer in der Figur 1 eingezeichneten, eine Mündungsöffnung 23 des Eingangsanschlusses 16 umfassenden Ebene, die nachstehend auch als Projektionsfläche 93 bezeichnet wird, in den Innenraum 22 einströmt, rein exemplarisch auf eine bereichsweise kreisabschnittsförmig ausgebildete Bahn 25, wie sie beispielsweise in der Figur 6 eingezeichnet ist, zu lenken und einer Mündungsöffnung 26 des Ausgangsanschlusses 18 zuzuführen und dort aus dem Ventilgehäuse 2 auszuströmen. Beispielhaft ist vorgesehen, dass die Mündungsöffnung 26 eine Austrittsebene 27 bestimmt, wobei die Austrittsebene 27 beispielhaft einen rechten Winkel zur Projektionsfläche 93 einnimmt.

Die rein exemplarisch kreisförmig ausgebildete Mündungsöffnung 23 und die ebenfalls rein exemplarisch kreisförmig ausgebildete Mündungsöffnung 26 weisen beispielhaft die gleiche Geometrie auf. Ein Raumabschnitt, der durch einem längs der Bahn 25 mit dieser Geometrie extrudierten Profilkörper bestimmt ist, kann als rohrförmig gebogener Fluidkanal 21 beschrieben werden, durch den zumindest ein erheblicher Teil des am Eingangsanschluss 16 bereitgestellten Fluids unmittelbar zum Ausgangsanschluss 18 strömt.

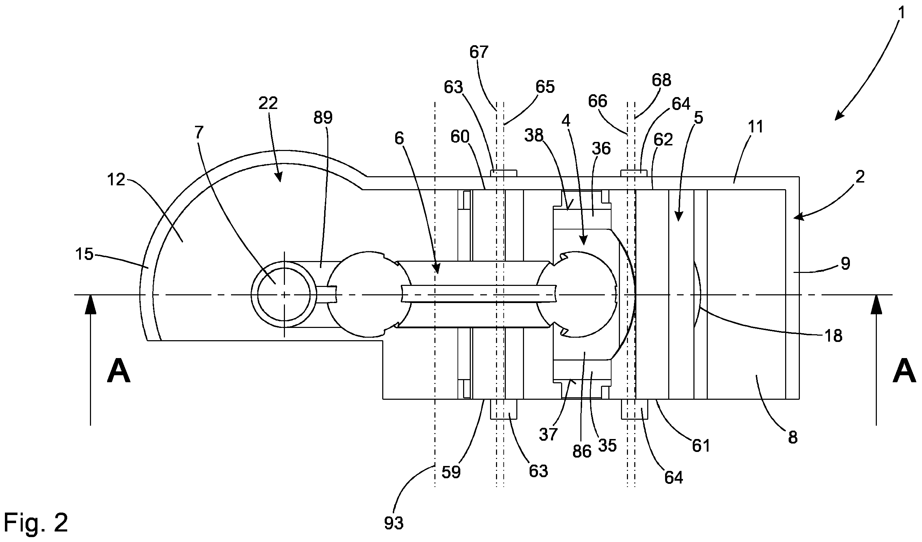

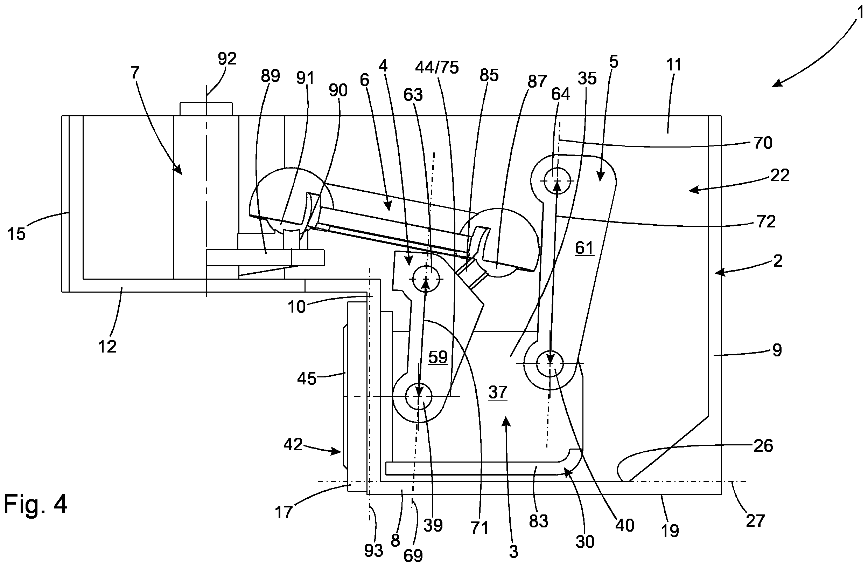

Das Ventilglied 3 umfasst beispielhaft einen kastenartig ausgebildeten Grundkörper 30, der einen Bodenbereich 31, eine an den Bodenbereich 31 angrenzende und rechtwinklig zum Bodenbereich 31 ausgerichtete Rückwand 32 und eine parallel zur Rückwand 32 ausgerichtete und beabstandet zu Rückwand 32 angeordnete Stützwand 33 umfasst. Ferner weist das Ventilglied 3 eine parallel und beabstandet zur Stützwand 33 angeordnete Vorderwand 34 auf, die ebenso wie die Stützwand 33 mit dem Bodenbereich 31 verbunden sein kann. Zudem sind an den Bodenbereich 31 angrenzende, rechtwinklig zum Bodenbereich ausgerichtete und zwischen der Rückwand 32 und der Vorderwand 34 erstreckte Seitenwände 35 und 36 vorgesehen. An einander entgegengesetzten Außenflächen 37, 38 der Seitenwände 35, 36 ragen spiegelsymmetrisch zu einer in der Figur 2 und in der Figur 4 dargestellten Schnittebene (A-A bzw. B-B) ausgerichtete Lagerzapfen 39, 40 ab. Aufgrund der Darstellung der Ventileinrichtung 1 in den Figuren 1 bis 7 sind nur die an der vorderen Seitenwand 35 ausgebildeten Lagerzapfen 39 und 40 sichtbar. An einer der Rückwand 32 abgewandten Außenfläche 41 der Vorderwand 30 ist ein Dichtabschnitt 42 ausgebildet. Der Dichtabschnitt 42 umfasst rein exemplarisch einen einstückig mit der Vorderwand 34 ausgebildeten Ringbund 43 und einen mit dem Ringbund 43 ortsfest gekoppelten, insbesondere formschlüssig aufgerasteten, rein exemplarisch rotationssymmetrisch zu einer Mittelachse 44 ausgebildeten Abschlussdeckel 45. Der Dichtabschnitt 42 umfasst ferner ein als O-Ring ausgebildetes und in einem Ringspalt 46, der von der Außenfläche 41 der Vorderwand 34 und dem Abschlussdeckel 45 bestimmt wird, angeordnetes Dichtmittel 47.

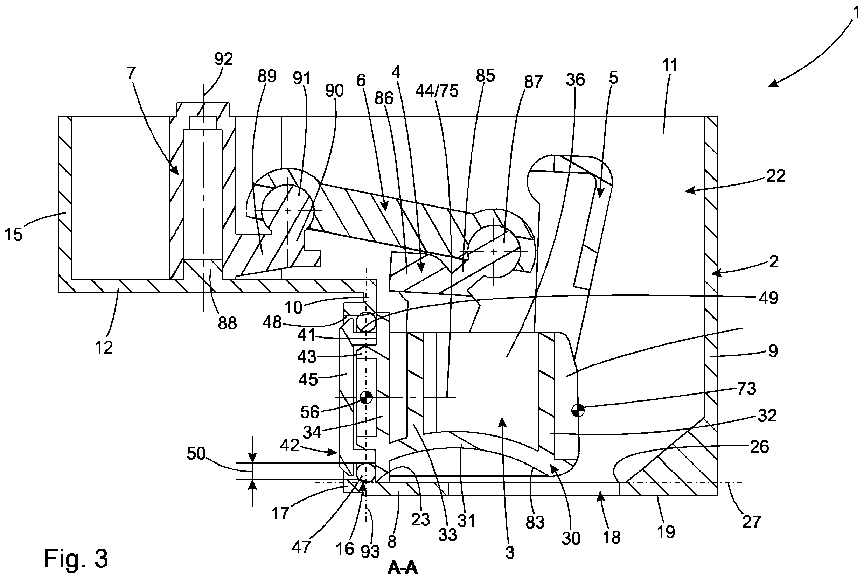

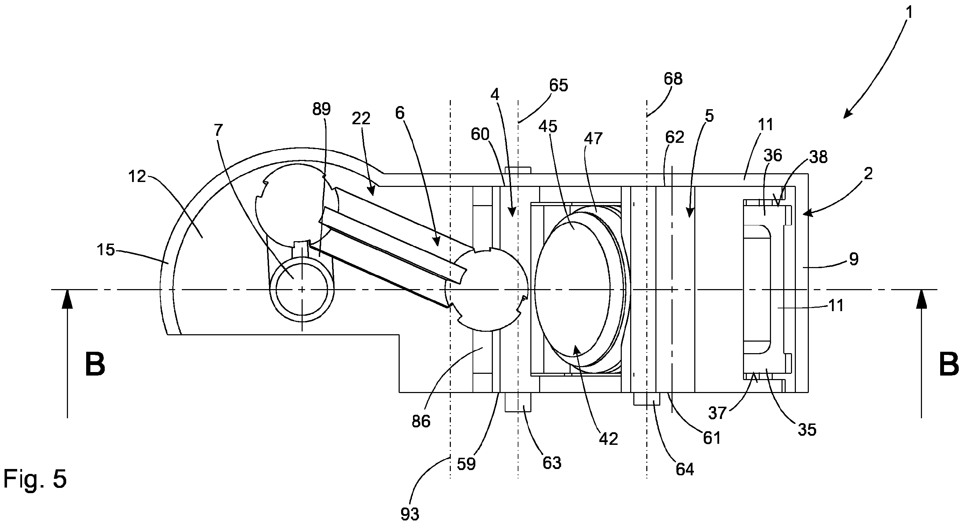

Wie aus der Darstellung der Figur 3 entnommen werden kann, liegt das Dichtmittel 47 in der Schließstellung, wie sie in den Figuren 2 bis 4 gezeigt ist, radial abdichtend sowohl an einer radial nach innen weisenden Innenoberfläche 48 bzw. an einer daran angrenzenden, exemplarisch parabelabschnittsförmig ausgebildeten Aufnahmegeometrie 94 des Eingangsanschlusses 16 als auch an einer radial nach außen gerichteten, wie die Innenoberfläche 48 kreiszylindrisch ausgebildeten Außenoberfläche 49 des Abschlussdeckels 45 an. Hierdurch dichtet das Dichtmittel 47 einen Dichtspalt 50 zwischen der Innenoberfläche 48 bzw. Aufnahmegeometrie 94 und der Außenoberfläche 49 ab. Aufgrund der rotationssymmetrischen Ausgestaltung der Innenoberfläche 48 bzw. der Aufnahmegeometrie 94 ist es vorteilhaft, wenn das Ventilglied 3 mit seinem Dichtabschnitt 42 ausgehend von der Schließstellung gemäß den Figuren 2 bis 4 zunächst eine zumindest im Wesentlichen lineare Bewegung längs der Mittelachse 44 durchführt, um anschließend im Rahmen einer Schwenkbewegung in die Öffnungsstellung gebracht zu werden, wie sie in den Figuren 5 bis 7 gezeigt ist.

Rein exemplarisch ist in der Figur 6 eine, zusätzlich auch separat dargestellte, Führungsbahn 55 für einen auf der Mittelachse 44 des Dichtabschnitts 42 angeordneten und in einer normal zur Mittelachse 44 ausgerichteten Dichtebene 24 angeordneten Bahnpunkt 56 eingezeichnet. Dieser Bahnpunkt 56 wird bei der Relativbewegung des Ventilglieds 3 gegenüber dem Ventilgehäuse 2 auf der Führungsbahn 55 zwischen der Schließstellung und der Öffnungsstellung verlagert. Hierbei kann die Führungsbahn 55 rein exemplarisch und rein schematisch in einen geradlinigen ersten Führungsbahnabschnitt 57 und in einen gekrümmt ausgebildeten zweiten Führungsbahnabschnitt 58 unterteilt werden.

Die Relativbewegung des Ventilglieds 3 gegenüber dem Ventilgehäuse 2 wird hierbei durch die beiden Schwenkhebel 4 und 5 bestimmt, wobei der erste Schwenkhebel 4 den Lagerzapfen 39 umgreift, während der zweite Schwenkhebel 5 den Lagerzapfen 40 des Ventilglieds 3 umgreift. Ferner ist vorgesehen, dass der rein exemplarisch U-förmig ausgebildete erste Schwenkhebel 4, der insbesondere spiegelbildlich zu den Schnittebenen der Figuren 2 und 5 gestaltet ist, an Außenoberflächen 59 und 60 jeweils mit einander entgegengesetzt ausgerichteten Lagerzapfen 63 ausgestattet ist. Diese Lagerzapfen 63 sind in nicht näher dargestellten Bohrungen in den Seitenwänden 9, 10 des Ventilgehäuses 2 schwenkbeweglich aufgenommen sind, wodurch eine Schwenklagerung des Schwenkhebels 4 gegenüber dem Ventilgehäuse 2 gewährleistet ist.

In gleicher Weise sind an Außenoberflächen 61 und 62 des Schwenkhebels 5 einander entgegengesetzt ausgerichtete Lagerzapfen 64 ausgebildet, die in ebenfalls nicht näher dargestellte Ausnehmungen in den Seitenwänden 9 und 10 des Ventilgehäuse 2 eingreifen und somit eine schwenkbewegliche Lagerung des zweiten Schwenkhebels 5 gegenüber dem Ventilgehäuse 2 gewährleisten.

Wie aus der Darstellung der Figur 1 entnommen werden kann, bestimmen die Lagerzapfen 39 und 40 am Ventilglied 3 sowie die Lagerzapfen 63 und 64 an den Schwenkhebeln 4 und 5 jeweils Schwenkachsen 65, 66, 67 und 68, die beispielhaft parallel zueinander ausgerichtet sind. Hierbei bestimmen die Schwenkachsen 65 und 67 eine erste Achsebene 69, ferner bestimmen die Schwenkachsen 66 und 68 eine zweite Achsebene 70, wie dies insbesondere aus den Darstellungen der Figuren 4 und 7 zu entnehmen ist.

Zudem kann der Darstellung der Figur 4 entnommen werden, dass die beiden Achsebenen 69 und 70 in der Schließstellung für das Ventilglied 3 zumindest nahezu parallel zu der vom Dichtmittel 47 bestimmten Dichtebene 24 und zur Projektionsfläche 93 ausgerichtet sind. In Zusammenhang mit der Ausrichtung der Achsebenen 69 und 70 gegenüber der Dichtebene 24 und der Projektionsfläche 93 in der Schließstellung soll der Begriff "zumindest nahezu" dahingehend verstanden werden, dass Abweichungen zwischen den Ausrichtungen der Ebenen in einem Bereich bis zu 5 Grad liegen können. Vorzugsweise ist vorgesehen, dass die Abweichungen zwischen den Ebenen 24, 69, 70 und 93 in einem Bereich kleiner 3 Grad liegen.

Demgegenüber ist in der Öffnungsstellung der Ventileinrichtung 1, wie sie auch in der Figur 7 gezeigt ist, eine gänzlich andere Ausrichtung der Achsebenen 69 und 70 gegenüber der Dichtebene 24 sowie gegenüber der Projektionsfläche 93 vorgesehen. Beispielhaft schließen die Dichtebene 24 und die erste Achsebene 69 in der Öffnungsstellung einen mit dem Bezugszeichen 80 gekennzeichneten Winkel von 45 Grad ein, während die Dichtebene 24 und die zweite Achsebene 70 in der Öffnungsstellung einen mit dem Bezugszeichen 81 gekennzeichneten Winkel von 73 Grad einnehmen.

Diese unterschiedliche Ausrichtung der Achsebenen 69 und 70 in der Öffnungsstellung wird dadurch erreicht, dass die erste Schwenkachse 65 rein exemplarisch die Mittelachse 44 des Dichtabschnitts 42 schneidet, während die Schwenkachse 66 in radialer Richtung zur Mittelachse 44 des Dichtabschnitts 42 beabstandet angeordnet ist und ferner auch in axialer Richtung von der ersten Schwenkachse 65 beabstandet ist. Zudem sind in der Figur 4 eingezeichnete Abstände 71 und 72 zwischen den Lagerzapfen 39 und 40 und den zugeordneten Lagerzapfen 63 und 64 unterschiedlich gewählt, so dass das Ventilglied 3 mit den Schwenkhebel 4 und 5 eine unsymmetrische Hebelgetriebeanordnung bildet, mit der die gewünschte Führungsbahn 55 für den Bahnpunkt 56 verwirklicht werden kann.

Ferner wird durch diese Hebelgetriebeanordnung auch gewährleistet, dass ein beispielsweise mittig an der Rückwand 32 angeordneter Bahnpunkt 73 entlang einer von der Führungsbahn 55 abweichenden Führungsbahn 74 zwischen der Schließstellung und der Öffnungsstellung für das Ventilglied 3 bewegt wird. Hieraus resultiert die bei einem Vergleich der Figuren 4 und 7 erkennbare Verkippung des Ventilglieds 3 aus einer Lage in der Schließstellung, bei der der Bodenbereich 31 rein exemplarisch parallel zur Bodenplatte 8 ausgerichtet ist, in eine Schwenkstellung, wie sie in der Öffnungsstellung erreicht wird, bei der der Bodenbereich 31 beispielhaft einen mit dem Bezugszeichen 82 gekennzeichneten Winkel von 35 Grad gegenüber einer Mittelachse 75 des Eingangsanschlusses 16 einnimmt. Es versteht sich, dass die vorstehenden Winkelangaben für die Winkel 80, 81 und 82 rein exemplarisch gewählt sind.

Wie aus den Schnittdarstellungen der Figuren 3 und 6 entnommen werden kann, ist der Bodenbereich 31 des Ventilglieds 3 innenseitig gekrümmt ausgebildet. Dabei ist eine Außenoberfläche 83 des Bodenbereichs 31 muldenförmig zweidimensional gekrümmt ausgebildet und kann als bereichsweiser Abschnitt einer Hüllfläche eines rein exemplarisch gedanklich als 90-Grad Rohrbogen ausgebildeten Fluidkanals 21 angesehen werden, deren äußerer Randbereich durch die kreisabschnittsförmige Hüllkurve 84 angedeutet wird. Hierdurch wird vom Ventilglied 2 in der Öffnungsstellung eine verlustarme Umlenkung des am Eingangsanschluss 16 einströmenden und durch den Ausgangsanschluss 18 abströmenden Fluids im Ventilgehäuse 2 ermöglicht.

Wie aus den Darstellungen der Figuren 1, 3, 4, 6 und 7 entnommen werden kann, umfasst der erste Schwenkhebel 4 einen Koppelzapfen 85, der von einem Verbindungsabschnitt 86 des ersten Schwenkhebels 4 abragt und der endseitig mit einem Kugelkopf 87 versehen ist. Ferner ist im Ventilgehäuse 2 ein drehbeweglich auf einem Lagerzapfen 88 aufgenommener Steuerzapfen 7 vorgesehen, der mit einem radial abragenden Lenker 89 ausgerüstet ist, wobei am Lenker 89 ebenfalls ein Koppelzapfen 90 mit einem Kugelkopf 91 angeordnet ist. Die beiden Kugelköpfe 87 und 91 sind über die Koppelstange 6 kinematisch miteinander gekoppelt, wodurch eine Schwenkbewegung des Steuerzapfens 7 um eine Mittelachse 92 in eine Schwenkbewegung des Schwenkhebels 4 um die Schwenkachse 67 umgesetzt werden kann. Da das Ventilglied 3 durch die Kopplung mit den Schwenkhebeln 4 und 5 zwangsgeführt ist, stellt sich für jede Schwenkstellung des Schwenkhebels 4 stets eine eindeutig zuzuordnende Schwenkstellung des Schwenkhebels 5 sowie eine eindeutig zuzuordnende Ausrichtung des Ventilglieds 3 ein.

Der Steuerzapfen 7 kann mit einer nicht näher dargestellten Antriebseinrichtung gekoppelt sein, die zur Einleitung eines Drehmoments um die Mittelachse 92 ausgebildet ist und die beispielsweise als elektrischer Schneckenantrieb verwirklicht und gegebenenfalls am Ventilgehäuse 2 festgelegt werden kann.

Die Mündungsöffnung 23 des Eingangsanschlusses 16 begrenzt rein exemplarisch die eine kreisscheibenförmig ausgebildete Projektionsfläche 93, wie sie schematisch in der Darstellungsebene der Figur 6 eingezeichnet ist. Diese Projektionsfläche 93 entspricht dem freien Querschnitt der Mündungsöffnung 23 des Eingangsanschlusses 16. Um eine vorteilhafte Umlenkung des durch den Eingangsanschluss 16 einströmenden Fluids mit Hilfe des Bodenbereichs 31 des Ventilglieds 3 zu gewährleisten, ist das Ventilglied 3 in der Öffnungsstellung, wie sie in den Figuren 1 sowie 5 bis 7 dargestellt ist, derart räumlich ausgerichtet, dass eine Projektion des Bodenbereichs 31 auf die Projektionsfläche 93 eine zumindest teilweise, durch Schraffur angedeutete Überdeckung mit der Projektionsfläche 93 aufweist. Hierdurch kann das längs der Mittelachse 75 einströmende Fluid durch die Außenoberfläche 83 des Bodenbereichs 31 verlustarm in Richtung des rechtwinklig zum Eingangsanschluss 16 ausgerichteten Ausgangsanschlusses 18 umgelenkt werden kann.

Die angrenzend an die Innenoberfläche 48 des Eingangsanschlusses 16 ausgebildete, parabelabschnittsförmig profilierte Aufnahmegeometrie 94 dient einer zuverlässigen und schonenden Aufnahme des Dichtmittels 47 im Eingangsanschluss 16 in der Schließstellung.

## Patentansprüche

1. Ventileinrichtung mit einem Ventilgehäuse (2), das von einem Fluidkanal (21) durchsetzt ist, der sich von einem Eingangsanschluss (16) zu einem Ausgangsanschluss (18) erstreckt, wobei im Fluidkanal (21) ein Ventilglied (3) beweglich zwischen einer Schließstellung zur Blockierung des Fluidkanals (21) und einer Öffnungsstellung zur Freigabe des Fluidkanals (21) aufgenommen ist und wobei im Fluidkanal (21) ein Ventilsitz (48, 94) ausgebildet ist, der für eine abdichtende Anlage eines Dichtabschnitts (42) des Ventilglieds (3) in der Schließstellung ausgebildet ist, sowie mit einer Führungseinrichtung (4, 5), die für eine Führung des Dichtabschnitts (42) entlang einer zwischen der Schließstellung und der Öffnungsstellung erstreckten Führungsbahn (55) ausgebildet ist, wobei die Führungsbahn (55) wenigstens zwei Führungsbahnabschnitte (57, 58) mit unterschiedlicher Krümmung aufweist, wobei der Ventilsitz (48, 94) eine umlaufende, radial nach innen ausgerichtete Dichtfläche umfasst und dass der Dichtabschnitt (42) eine umlaufende, radial nach außen ausgerichtete Außenumfangsfläche (49) umfasst, wobei das Ventilglied (3) einen Grundkörper (30) umfasst, wobei der Dichtabschnitt (42) an einer Vorderwand (34) des Grundkörpers (30) ausgebildet ist, wobei eine erste Schwenkachse (65) und eine dritte Schwenkachse (67) parallel und entgegengesetzt zueinander ausgerichtete, jeweils an die Vorderwand (34) angrenzende Seitenwände (35, 36) des Grundkörpers (30) durchsetzen und wobei ein Bodenbereich (31) des Grundkörpers (30) angrenzend an die Vorderwand (34) und an die Seitenflächen (35, 36) des Grundkörpers (30) ausgebildet ist, **dadurch gekennzeichnet, dass** eine Hüllgeometrie für den Fluidkanal (21) zwischen dem Eingangsanschluss (16) und dem Ausgangsanschluss (18) als gekrümmter Rohrbogen ausgebildet ist und wobei der Bodenbereich (31) des Grundkörpers (30) in der Öffnungsstellung die Hüllgeometrie abschnittsweise begrenzt.

2. Ventileinrichtung nach Anspruch 1, **dadurch gekennzeichnet, dass** ein von der Schließstellung ausgehender erster Führungsbahnabschnitt (57) einen größeren Krümmungsradius als ein daran anschließender, bis zur Öffnungsstellung erstreckter zweiter Führungsbahnabschnitt (58) aufweist.

3. Ventileinrichtung nach Anspruch 1, oder 2, **dadurch gekennzeichnet, dass** der Dichtabschnitt (42) ein umlaufendes, ringförmig, ausgebildetes Dichtmittel (47) umfasst, das radial nach außen von der Außenumfangsfläche (49) des Ventilglieds (3) abragt und das eine Dichtebene (24) bestimmt, wobei die Führungseinrichtung (4, 5) einen Schwenkhebel (4) umfasst, der schwenkbeweglich um die erste Schwenkachse (65) am Ventilglied (3) und schwenkbeweglich um die zweite Schwenkachse (67) am Ventilgehäuse gelagert (2) ist, wobei die erste Schwenkachse (65) und die zweite Schwenkachse (67) jeweils parallel zur Dichtebene (24) und/oder parallel zueinander ausgerichtet sind.

4. Ventileinrichtung nach Anspruch 3, **dadurch gekennzeichnet, dass** die Führungseinrichtung (4, 5) einen zweiten Schwenkhebel (5) umfasst, der schwenkbeweglich um eine dritte Schwenkachse (66) am Ventilglied (3) und schwenkbeweglich um eine vierte Schwenkachse (68) am Ventilgehäuse (2) gelagert ist, wobei die dritte Schwenkachse (66) und die vierte Schwenkachse (68) jeweils parallel zur Dichtebene (24) und/oder parallel zueinander ausgerichtet sind.

5. Ventileinrichtung nach Anspruch 4, **dadurch gekennzeichnet, dass** die erste Schwenkachse (65) und die zweite Schwenkachse (67) in einer ersten Achsebene (69) angeordnet sind, die in der Schließstellung zumindest nahezu parallel zur Dichtebene (24) angeordnet ist und dass die dritte Schwenkachse (66) und die vierte Schwenkachse (68) in einer zweiten Achsebene (70) angeordnet sind, die in der Schließstellung zumindest nahezu parallel zur Dichtebene (24) angeordnet ist.

6. Ventileinrichtung nach Anspruch 4, **dadurch gekennzeichnet, dass** die erste Schwenkachse (65) und die zweite Schwenkachse (67) in einer ersten Achsebene (69) angeordnet sind, die in der Schließstellung zumindest nahezu parallel zur Dichtebene (24) angeordnet ist oder dass die dritte Schwenkachse (66) und die vierte Schwenkachse (68) in einer zweiten Achsebene (70) angeordnet sind, die in der Schließstellung zumindest nahezu parallel zur Dichtebene (24) angeordnet ist.

7. Ventileinrichtung nach Anspruch 4, 5 oder 6, **dadurch gekennzeichnet, dass** ein Abstand der ersten Schwenkachse (65) zur Dichtebene (24) kleiner als ein Abstand der dritten Schwenkachse (66) zur Dichtebene (24) ist und/oder dass ein Abstand der ersten Schwenkachse (65) zur einer Mittelachse (44) des Dichtabschnitts (42) kleiner als ein Abstand der dritten Schwenkachse (66) zur Mittelachse (44) des Dichtabschnitts (42) ausgebildet ist.

8. Ventileinrichtung nach einem der Ansprüche 4 bis 7, **dadurch gekennzeichnet, dass** eine Antriebseinrichtung vorgesehen ist, die mit dem ersten Schwenkhebel (4) oder mit dem zweiten Schwenkhebel (5) gekoppelt ist, um eine Übertragung einer Stellbewegung von der Antriebseinrichtung auf den ersten Schwenkhebel (4) oder den zweiten Schwenkhebel (5) zu ermöglichen.

9. Ventileinrichtung nach einem der vorhergehenden Ansprüche, **dadurch gekennzeichnet, dass** ein freier Querschnitt des Ventilsitzes (48, 94) eine Projektionsfläche (93) bestimmt und dass eine Projektion des Bodenbereichs (31) des Grundkörpers (30) in der Öffnungsstellung auf die Projektionsfläche (93) zumindest nahezu dem freien Querschnitt entspricht und/oder dass die Hüllgeometrie für den Fluidkanal (21) zwischen dem Eingangsanschluss (16) und dem Ausgangsanschluss (18) als 90-Grad Rohrbogen ausgebildet ist.

10. Ventileinrichtung nach einem der vorhergehenden Ansprüche, **dadurch gekennzeichnet, dass** die Dichtfläche des Ventilsitzes (48, 94) zylindrisch ausgebildet ist und dass die Außenumfangsfläche (49) des Dichtabschnitts (42) kreiszylindrisch ausgebildet ist.

11. Ventileinrichtung nach Anspruch 10, **dadurch gekennzeichnet, dass** die Dichtfläche des Ventilsitzes (48, 94) kreiszylindrisch ausgebildet ist.

## Claims

1. Valve device with a valve housing (2), through which a fluid channel (21) passes, which extends from an inlet connection (16) to an outlet connection (18), wherein a valve member (3) is received in the fluid channel (21) so as to be movable between a closed position for blocking the fluid channel (21) and an open position for releasing the fluid channel (21), and wherein a valve seat (48, 94) is formed in the fluid channel (21), which is designed for a sealing abutment of a sealing section (42) of the valve member (3) in the closed position, and having a guide device (4, 5) which is designed for guiding the sealing section (42) along a guide track (55) extending between the closed position and the open position, the guide track (55) having at least two guide track sections (57, 58) with different curvature, the valve seat (48, 94) comprising a circumferential, radially inwardly oriented sealing surface and the sealing section (42) comprising a circumferential, radially outwardly oriented outer peripheral surface (49), the valve member (3) comprising a base body (30), the sealing section (42) being formed on a front wall (34) of the base body (30), a first pivot axis (65) and a third pivot axis (67) penetrating side walls (35, 36) of the base body (30) which are oriented parallel and opposite to one another and respectively adjoining the front wall (34), wherein a bottom region (31) of the base body (30) being formed adjacent to the front wall (34) and to the side walls (35, 36) of the base body (30), **characterized in that** an envelope geometry for the fluid channel (21) between the inlet connection (16) and the outlet connection (18) is formed as a curved pipe bend, and **in that** the bottom region (31) of the base body (30) partially delimits the envelope geometry in the open position.

2. Valve device according to claim 1, **characterized in that** a first guide track section (57) starting from the closed position has a larger radius of curvature than an adjoining second guide track section (58) extending to the open position.

3. Valve device according to claim 1, or 2, **characterized in that** the sealing section (42) comprises a circumferential annular sealing means (47) which projects radially outwards from the outer circumferential surface (49) of the valve member (3) and which defines a sealing plane (24), the guide means (4, 5) comprises a pivoted lever (4) which is mounted (2) on the valve member (3) so as to be pivotable about the first pivot axis (65) and is mounted on the valve housing so as to be pivotable about the second pivot axis (67), the first pivot axis (65) and the second pivot axis (67) each being aligned parallel to the sealing plane (24) and/or parallel to one another.

4. Valve device according to claim 3, **characterized in that** the guiding device (4, 5) comprises a second pivoted lever (5) which is mounted pivotably movable about a third pivot axis (66) on the valve member (3) and which is mounted pivotably movable about a fourth pivot axis (68) on the valve housing (2), the third pivot axis (66) and the fourth pivot axis (68) each being aligned parallel to the sealing plane (24) and/or parallel to one another.

5. Valve device according to claim 4, **characterized in that** the first pivot axis (65) and the second pivot axis (67) are arranged in a first axis plane (69) which, in the closed position, is arranged at least almost parallel to the sealing plane (24), and **in that** the third pivot axis (66) and the fourth pivot axis (68) are arranged in a second axis plane (70) which, in the closed position, is arranged at least almost parallel to the sealing plane (24).

6. Valve device according to claim 4, **characterized in that** the first pivot axis (65) and the second pivot axis (67) are arranged in a first axis plane (69) which, in the closed position, is arranged at least almost parallel to the sealing plane (24), or **in that** the third pivot axis (66) and the fourth pivot axis (68) are arranged in a second axis plane (70) which, in the closed position, is arranged at least almost parallel to the sealing plane (24).

7. Valve device according to claim 4, 5 or 6, **characterized in that** a distance of the first pivot axis (65) to the sealing plane (24) is smaller than a distance of the third pivot axis (66) to the sealing plane (24) and/or that a distance of the first pivot axis (65) to a center axis (44) of the sealing section (42) is smaller than a distance of the third pivot axis (66) to the center axis (44) of the sealing section (42) .

8. Valve device according to one of the claims 4 to 7, **characterized in that** a drive device is provided which is coupled to the first pivoted lever (4) or to the second pivoted lever (5) in order to enable a transmission of an actuating movement from the drive device to the first pivoted lever (4) or the second pivoted lever (5).

9. Valve device according to one of the preceding claims, **characterized in that** a free cross section of the valve seat (48, 94) determines a projection surface (93) and **in that** a projection of the bottom region (31) of the base body (30) in the open position onto the projection surface (93) corresponds at least almost to the free cross section and/or **in that** the envelope geometry for the fluid channel (21) between the inlet connection (16) and the outlet connection (18) is designed as a 90-degree pipe bend.

10. Valve device according to one of the preceding claims, **characterized in that** the sealing surface of the valve seat (48, 94) is designed cylindrically and that the outer circumferential surface (49) of the sealing section (42) is designed circularly cylindrically.

11. Valve device according to claim 10, **characterized in that** the sealing surface of the valve seat (48, 94) is circularly cylindrical.

## Revendications

1. Dispositif de soupape avec un carter de soupape (2), qui est traversé par un canal de fluide (21), qui s'étend à partir d'un raccord d'entrée (16) vers un raccord de sortie (18), dans lequel un élément de soupape (3) est reçu dans le canal de fluide (21) de manière mobile entre une position de fermeture pour le blocage du canal de fluide (21) et une position d'ouverture pour la libération du canal de fluide (21) et dans lequel un siège de soupape (48, 94), qui est réalisé pour un appui assurant une étanchéité d'une partie d'étanchéité (42) de l'élément de soupape (3) dans la position de fermeture, est réalisé dans le canal de fluide (21), ainsi qu'avec un dispositif de guidage (4, 5), qui est réalisé pour un guidage de la partie d'étanchéité (42) le long d'une voie de guidage (55) étendue entre la position de fermeture et la position d'ouverture, dans lequel la voie de guidage (55) présente au moins deux parties de voie de guidage (57, 58) avec une courbure différente, dans lequel le siège de soupape (48, 94) comprend une surface d'étanchéité périphérique, orientée radialement vers l'intérieur et que la partie d'étanchéité (42) comprend une surface circonférentielle extérieure (49) périphérique, orientée radialement vers l'extérieur, dans lequel l'élément de soupape (3) comprend un corps de base (30), dans lequel la partie d'étanchéité (42) est réalisée sur une paroi avant (34) du corps de base (30), dans lequel un premier axe de pivotement (65) et un troisième axe de pivotement (67) traversent des parois latérales (35, 36) du corps de base (30) orientées parallèlement et de manière opposée l'une à l'autre, respectivement adjacentes à la paroi avant (34) et dans lequel une zone de fond (31) du corps de base (30) est réalisée de manière adjacente à la paroi avant (34) et aux surfaces latérales (35, 36) du corps de base (30), **caractérisé en ce qu'**une géométrie de coque pour le canal de fluide (21) entre le raccord d'entrée (16) et le raccord de sortie (18) est réalisée sous la forme d'un coude tubulaire courbé et dans lequel la zone de fond (31) du corps de base (30) dans la position d'ouverture délimite sur certaines parties la géométrie de coque.

2. Dispositif de soupape selon la revendication 1, **caractérisé en ce qu'**une première partie de voie de guidage (57) partant de la position de fermeture présente un plus grand rayon de courbure qu'une deuxième partie de voie de guidage (58) raccordée à celle-ci, étendue jusqu'à la position d'ouverture.

3. Dispositif de soupape selon la revendication 1, ou 2, **caractérisé en ce que** la partie d'étanchéité (42) comprend un moyen d'étanchéité (47) périphérique, réalisé de manière annulaire, qui fait saillie radialement vers l'extérieur de la surface circonférentielle extérieure (49) de l'élément de soupape (3) et qui détermine un plan d'étanchéité (24), dans lequel le dispositif de guidage (4, 5) comprend un levier pivotant (4), qui est monté sur l'élément de soupape (3) de manière à pouvoir pivoter autour du premier axe de pivotement (65) et sur le carter de soupape (2) de manière à pouvoir pivoter autour du deuxième axe de pivotement (67), dans lequel le premier axe de pivotement (65) et le deuxième axe de pivotement (67) sont orientés respectivement parallèlement au plan d'étanchéité (24) et/ou parallèlement l'un à l'autre.

4. Dispositif de soupape selon la revendication 3, **caractérisé en ce que** le dispositif de guidage (4, 5) comprend un deuxième levier pivotant (5), qui est monté sur l'élément de soupape (3) de manière à pouvoir pivoter autour d'un troisième axe de pivotement (66) et sur le carter de soupape (2) de manière à pouvoir pivoter autour d'un quatrième axe de pivotement (68), dans lequel le troisième axe de pivotement (66) et le quatrième axe de pivotement (68) sont orientés respectivement parallèlement au plan d'étanchéité (24) et/ou parallèlement l'un à l'autre.

5. Dispositif de soupape selon la revendication 4, **caractérisé en ce que** le premier axe de pivotement (65) et le deuxième axe de pivotement (67) sont disposés dans un premier plan d'axe (69), qui est disposé dans la position de fermeture au moins presque parallèlement au plan d'étanchéité (24) et que le troisième axe de pivotement (66) et le quatrième axe de pivotement (68) sont disposés dans un deuxième plan d'axe (70), qui est disposé dans la position de fermeture au moins presque parallèlement au plan d'étanchéité (24).

6. Dispositif de soupape selon la revendication 4, **caractérisé en ce que** le premier axe de pivotement (65) et le deuxième axe de pivotement (67) sont disposés dans un premier plan d'axe (69), qui est disposé dans la position de fermeture au moins presque parallèlement au plan d'étanchéité (24) ou que le troisième axe de pivotement (66) et le quatrième axe de pivotement (68) sont disposés dans un deuxième plan d'axe (70), qui est disposé dans la position de fermeture au moins presque parallèlement au plan d'étanchéité (24).

7. Dispositif de soupape selon la revendication 4, 5 ou 6, **caractérisé en ce qu'**une distance du premier axe de pivotement (65) par rapport au plan d'étanchéité (24) est inférieure à une distance du troisième axe de pivotement (66) par rapport au plan d'étanchéité (24) et/ou qu'une distance du premier axe de pivotement (65) par rapport à un axe médian (44) de la partie d'étanchéité (42) est réalisée de manière inférieure à une distance du troisième axe de pivotement (66) par rapport à l'axe médian (44) de la partie d'étanchéité (42).

8. Dispositif de soupape selon l'une quelconque des revendications 4 à 7, **caractérisé en ce qu'**un dispositif d'entraînement est prévu, qui est accouplé au premier levier pivotant (4) ou au deuxième levier pivotant (5), afin de permettre une transmission d'un mouvement de réglage à partir du dispositif d'entraînement sur le premier levier pivotant (4) ou le deuxième levier pivotant (5).

9. Dispositif de soupape selon l'une quelconque des revendications précédentes, **caractérisé en ce qu'**une section transversale libre du siège de soupape (48, 94) détermine une surface de projection (93) et qu'une projection de la zone de fond (31) du corps de base (30) dans la position d'ouverture sur la surface de projection (93) correspond au moins à peu près à la section transversale libre et/ou que la géométrie de coque pour le canal de fluide (21) entre le raccord d'entrée (16) et le raccord de sortie (18) est réalisée sous la forme d'un coude tubulaire de 90 degrés.

10. Dispositif de soupape selon l'une quelconque des revendications précédentes, **caractérisé en ce que** la surface d'étanchéité du siège de soupape (48, 94) est réalisée de manière cylindrique et que la surface circonférentielle extérieure (49) de la partie d'étanchéité (42) est réalisée de manière cylindrique circulaire.

11. Dispositif de soupape selon la revendication 10, **caractérisé en ce que** la surface d'étanchéité du siège de soupape (48, 94) est réalisée de manière cylindrique circulaire.
